# EUROPÄISCHE PATENTSCHRIFT

(11) **EP 0 703 393 B1**
(45) Veröffentlichungstag und Bekanntmachung des Hinweises auf die Patenterteilung: **16.12.1998**
(21) Anmeldenummer: 95114625.7
(22) Anmeldetag: 18.09.1995
(51) Int. Cl.: F16K 37/00

(54) **Vorrichtung zur Ueberwachung des Ventilhubs eines Ventils**
Valve lift checking device
Dispositif de surveillance de levée d'une soupape

(30) Priorität: 21.09.1994 CH 2862/94
(43) Veröffentlichungstag der Anmeldung: 27.03.1996
(73) Patentinhaber: Georg Fischer Rohrleitungssysteme AG, CH-8201 Schaffhausen (CH)
(72) Erfinder: Heiniger, Martin, CH-8200 Schaffhausen (CH)
(74) Vertreter: Rottmann, Maximilian R.

(56) Entgegenhaltungen:
- DD-A- 132 288
- DE-A- 3 509 718
- DE-U- 9 409 093
- GB-A- 1 116 040
- US-A- 3 802 462
- SOVIET PATENTS ABSTRACTS Section PQ, Week J50, 2. Februar 1983 Derwent Publications Ltd., London, GB; Class Q66, AN B1286 & SU-A-901 692 (VOROSH MACH CONS IN) 5. Februar 1982

## Beschreibung

Die Erfindung betrifft eine Vorrichtung zur Überwachung des Ventilhubs eines pneumatisch oder hydraulisch angetriebenen, einen über eine Druckspindel betätigbaren Ventilkörper aufweisenden Ventils, insbesondere eines Membranventils, wobei eine Schaltspindel mit der Druckspindel in Wirkverbindung steht und an der Schaltspindel zwei Schaltnocken zur Betätigung von zwei als Signalgeber für zwei Ventilstellungen dienenden Endschaltern festgelegt sind, wobei die beiden Schaltnocken in Abstand zueinander positionierbar an der Schaltspindel angeordnet sind und jedem Endschalter ein Schaltnocken zugeordnet ist.

Sogenannte elektrische Rückmelder der eingangs erwähnten Art werden eingesetzt zur Anzeige der Ventilstellung in Verbindung mit pneumatisch oder hydraulisch angetriebenen Hubventilen. Hierbei werden die Endschalter jeweils in den beiden Endstellungen des Ventilhubs betätigt, wodurch ein der Offen- bzw. Geschlossenstellung des Ventils entsprechendes elektrisches Signal erzeugt wird. Dieses elektrische Signal kann sodann beispielsweise an eine Steuerung oder ein Schaltpult weitergegeben werden.

Als nachteilig bei vorbekannten Rückmeldern mit nur einem Schaltnocken hat sich herausgestellt, dass die Schaltelemente jeweils an den Ventilhub mechanisch angepasst werden müssen.

Aus der Schrift GB-1,116,040 geht eine gattungsgemäße Vorrichtung hervor, bei der die Schaltelemente auf positionssensitiven Magnetschaltern basieren, welche in einem geschützten Bereich angeordnet sind. Zur Anpassung an unterschiedlichen Ventilhub muss dieser Bereich jedoch geöffnet werden, um die Position der Magnetelemente entsprechend anzupassen. (Seite 2 Zeilen 80-86)

Angesichts dieser Gegebenheiten hat sich der Erfinder die Aufgabe gestellt, eine Vorrichtung der eingangs erwähnten Art zu schaffen, bei der die erforderliche Anpassung an den Ventilhub auf einfache Weise vorgenommen werden kann.

Zur erfindungsgemässen Lösung der Aufgabe führt, dass zwischen den beiden Schaltnocken ein als Mitnehmer wirkender Quersteg angeordnet ist, durch welchen die Schaltnocken beim Öffnen und Schliessen des Ventils selbsttätig in ihre richtige Arbeitsposition verschiebbar sind.

Spezielle und weiterbildende Ausführungsarten der erfindungsgemässen Vorrichtung sind Gegenstand von abhängigen Patentansprüchen.

Mit der erfindungsgemässen Anordnung, bei der zwischen den beiden Schaltnocken ein als Mitnehmer wirkender Quersteg angeordnet ist, durch welchen die Schaltnocken beim Öffnen und Schliessen des Ventils selbsttätig in ihre richtige Arbeitsposition verschiebbar sind, erübrigt sich eine mechanische Verstellmöglichkeit der Endschalter, da die die Schaltnocken beim erstmaligen Öffnen und Schliessen des Ventils selbsttätig in ihre richtige Arbeitsposition verschoben werden. Auch bei einem allfälligen Setzvorgang der Mediumsmembrane während der Lagerung oder dem Betrieb des Ventilantriebs wird der Schaltnocken zur Anzeige der geschlossenen Stellung des Ventils selbsttätig nachjustiert.

Zur weiteren Erhöhung der Funktionssicherheit der Vorrichtung ist die Schaltspindel mit der Druckspindel gekoppelt. Des weiteren ist die Vorrichtung bevorzugt derart ausgestaltet, dass sie in den Gehäusedeckel eines Ventilgehäuses einschraubbar ist.

Zum Schutz des Rückmelders vor Verschmutzung wird dieser bevorzugt von einer durchsichtigen Abdeckhaube umschlossen. Diese kann zur sichtbaren Messung des Ventilhubs mit einer Skala versehen sein. Zweckmässigerweise sind in diesem Fall die Schaltnocken aus vorzugsweise rotem Kunststoff gefertigt.

Die Endschalter können als Mikroschalter, induktive Nährungsschalter oder andere geeignete Schaltelemente ausgebildet sein und sind bezüglich der Achse der Schaltspindel bevorzugt symmetrisch zueinander und in unveränderbarer Position angeordnet.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1: einen Längsschnitt durch einen Rückmelder;
- Fig. 2: die Draufsicht auf den Rückmelder von Fig. 1 ohne Abdeckhaube und mit um 90° gedrehten Endschaltern;
- Fig. 3a-c: die selbsttätige Positionierung der Schaltnocken bei erstmaliger Ventilbetätigung.

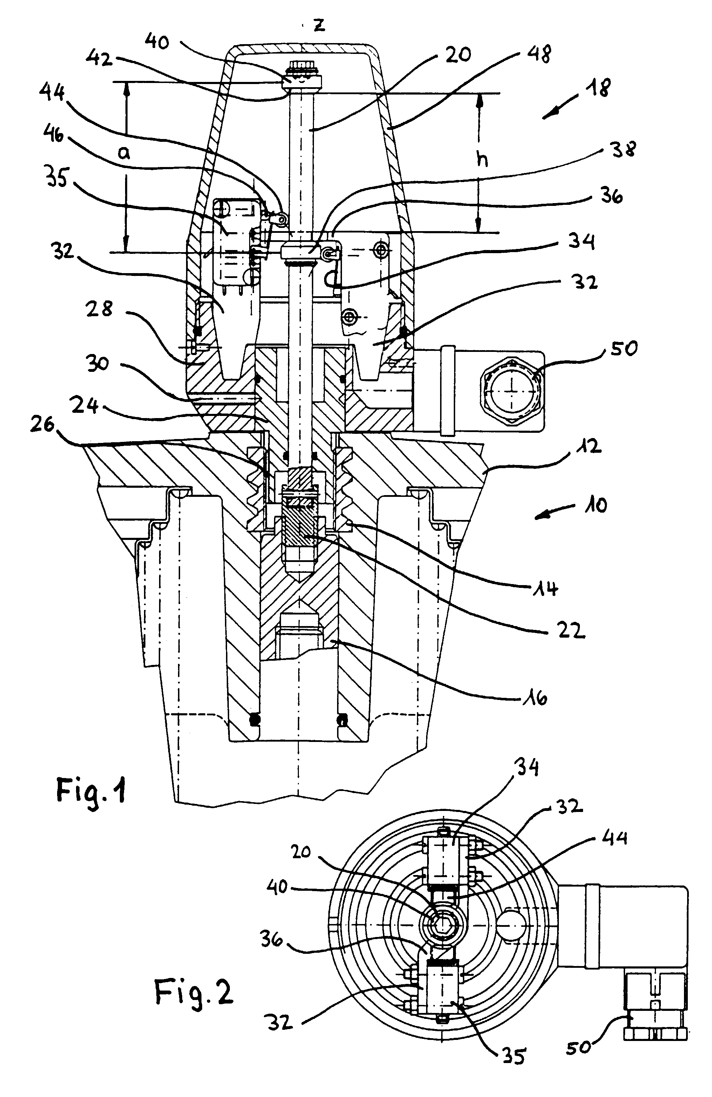

Ein aus Gründen der besseren Übersicht in der Zeichnung nur teilweise wiedergegebenes Ventilgehäuse 10 eines nicht näher dargestellten Membranventils weist gemäss Fig. 1 einen Gehäusedeckel 12 auf, in welchem zentral eine Gewindebüchse 14 angeordnet ist. Dem Ventilgehäuse 10 aufgesetzt ist ein Rückmelder 18 mit einer Schaltspindel 20, die über ein Kupplungsstück 22 mit einer Druckspindel 16 verbunden ist. Der Rückmelder 18 ist über ein zentral angeordnetes Schraubteil 24 mit Aussengewinde 26 in die Gewindebüchse 14 eingeschraubt. Die Schaltspindel 20 durchsetzt hierbei das Schraubteil 24 in Richtung der Betätigungsachse z.

Das Schraubteil 24 wird von einem mittels einer Stellschraube 30 fixierbaren Trägerteil 28 übergriffen. Von diesem Trägerteil 28 ragen parallel zur Achsenrichtung z angeordnete Montagewände 32 auf, an welche Endschalter 34,35 symmetrisch festgelegt sind. Die beiden Montagewände 32 sind über einen senkrecht zur Achsenrichtung z liegenden Quersteg 36 miteinander verbunden.

An der Schaltspindel 20 sind zwei Schaltnocken 38,40 klemmend verschiebbar befestigt und weisen nach erfolgter Inbetriebnahme des Membranventils einen Abstand a zueinander auf. Der Quersteg 36 liegt zwischen den beiden Schaltnocken 38,40 und umschlingt gemäss Fig. 2 die Schaltspindel 20 teilweise derart, dass er als Mitnehmer für die Schaltnocken 38,40 wirken kann. Der Schaltnocken 38 steuert den die Offenstellung des Ventils anzeigenden Endschalter 34, der Schaltnocken 40 den die Geschlossenstellung des Ventils anzeigenden Endschalter 35. Hierbei laufen die Schaltrollen 44 der Endschalter 34,35 während der Ventilbetätigung auf der Schaltspindel 20 und werden bei Erreichen der Ventilendstellung über Kegelflächen 42 auf die Schaltnocken 38,40 gehoben. Dadurch wird ein Schaltstift 46 betätigt, welcher ein entsprechendes elektrisches Signal auslöst.

Der Rückmelder 18 ist zum Schutz gegen Verschmutzung mit einer das Trägerteil 28 übergreifenden durchsichtigen Abdeckhaube 48 versehen. Zur Herausführung der elektrischen Verbindungskabel aus dem Rückmelder 18 ist seitlich am Trägerteil 28 ein Kanal mit einem Gerätestecker 50 angeordnet.

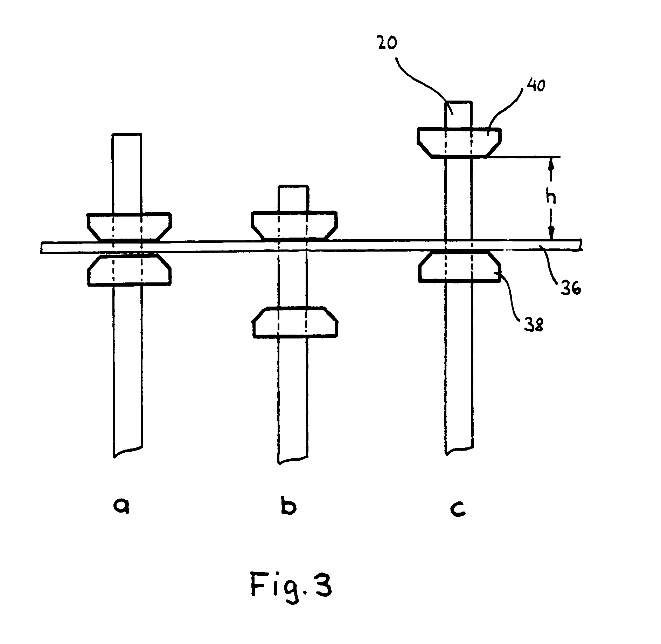

In den Fig. 3a - c sind die Positionen der beiden Schaltnocken 38,40 an der Schaltspindel 20 während dem erstmaligen Öffnen und Schliessen des Ventils dargestellt.

Fig. 3a zeigt die Ausgangsposition, nachdem der Rückmelder 18 auf das Ventilgehäuse 10 aufgeschraubt worden ist. Die beiden Schaltnocken 38,40 werden hierbei von Hand beidseitig an den Quersteg 36 geschoben.

In Fig. 3b ist das Ventil erstmals geschlossen. Durch die Mitnehmerwirkung des Querstegs 36 ist während der Schliessbewegung des Ventils eine Verschiebung des Schaltnockens 40 in seine endgültige Position erfolgt.

Fig. 3c zeigt die Position der Schaltnocken 38,40, nachdem das Ventil erstmals seine Offenstellung erreicht hat. Bei dieser den maximalen Ventilhub h ausführenden Ventilbewegung ist auch der zweite Schaltnocken 38 in seine endgültige Position verschoben worden.

Aus den Fig. 3a bis 3c ist somit klar ersichtlich, dass die Anpassung der Schaltnocken 38,40 an den Ventilhub selbsttätig erfolgt.

## Patentansprüche

1. Vorrichtung zur Überwachung des Ventilhubs eines pneumatisch oder hydraulisch angetriebenen, einen über eine Druckspindel (16) betätigbaren Ventilkörper aufweisenden Ventils, insbesondere eines Membranventils, wobei eine Schaltspindel (20) mit der Druckspindel (16) in Wirkverbindung steht und an der Schaltspindel (20) zwei Schaltnocken (38,40) zur Betätigung von zwei als Signalgeber für zwei Ventilstellungen dienenden Endschaltern (34,35) festgelegt sind, wobei die beiden Schaltnocken (38,40) in Abstand (a) zueinander positionierbar an der Schaltspindel (20) angeordnet sind und jedem Endschalter (34,35) ein Schaltnocken (38,40) zugeordnet ist, dadurch gekennzeichnet, dass zwischen den beiden Schaltnocken (38,40) ein als Mitnehmer wirkender Quersteg (36) angeordnet ist, durch welchen die Schaltnocken (38,40) beim Öffnen und Schliessen des Ventils selbsttätig in ihre richtige Arbeitsposition verschiebbar sind.

2. Vorrichtung nach Anspruch 1, dadurch gekennzeichnet, dass die Schaltnocken (38,40) klemmend verschiebbar an der Schaltspindel (20) befestigt sind.

3. Vorrichtung nach Anspruch 1 oder 2, dadurch gekennzeichnet, dass die Schaltspindel (20) mit der Druckspindel (16) gekoppelt ist.

4. Vorrichtung nach einem der Ansprüche 1 bis 3, dadurch gekennzeichnet, dass sie in den Gehäusedeckel (12) eines Ventilgehäuses (10) einschraubbar ist.

5. Vorrichtung nach einem der Ansprüche 1 bis 4, dadurch gekennzeichnet, dass der die Schaltnocken (38,40) tragende Teil der Schaltspindel (20) und die Endschalter (34,35) von einer durchsichtigen Abdeckhaube (48) umschlossen sind.

6. Vorrichtung nach Anspruch 5, dadurch gekennzeichnet, dass die Abdeckhaube (48) mit einer Skala zur sichtbaren Messung des Ventilhubs versehen ist.

7. Vorrichtung nach einem der Ansprüche 1 bis 6, dadurch gekennzeichnet, dass die Schaltnocken (38,40) aus vorzugsweise rotem Kunststoff gefertigt sind.

8. Vorrichtung nach einem der Ansprüche 1 bis 7, dadurch gekennzeichnet, dass die Endschalter (34,35) als Mikroschalter mit Rollenhebel oder induktive Näherungsschalter ausgebildet sind.

9. Vorrichtung nach einem der Ansprüche 1 bis 8, dadurch gekennzeichnet, dass die Endschalter (34,35) bezüglich der Achse (z) der Schaltspindel (20) symmetrisch zueinander und in unveränderbarer Position angeordnet sind.

10. Vorrichtung nach einem der Ansprüche 5 oder 6, dadurch gekennzeichnet, dass die Abdeckhaube (48) mit einem Trägerteil (28) als Einheit um ein Schraubteil (24) verdreh- und arretierbar ist, in dem Masse, wie es für die zweckmässige Lage eines Anschlusssteckers (50) nötig ist.

## Claims

1. Device for monitoring the valve lift of a pneumatically or hydraulically driven valve which has a valve body which can be actuated by way of a pressing screw (16), in particular a diaphragm valve, with a shaft (20) being in operative connection with the pressing screw (16), and with two operating cams (38, 40) being fixed to the shaft (20) for the actuation of two limit switches (34, 35) which are used as signal transmitters for two valve positions, with the two operating cams (38, 40) being arranged on the shaft (20) in such a way that they can be positioned with clearance (a) from each other, and with an operating cam (38, 40) being allocated to each limit switch (34, 35), characterized in that between the two operating cams (38, 40) a crossbar (36) acting as a carrier is arranged, by means of which the operating cams (38, 40) can be automatically displaced into their correct working position when the valve is opened and closed.

2. Device according to claim 1, characterized in that the operating cams (38, 40) are fastened to the shaft (20) in a clamping and displaceable manner.

3. Device according to claim 1 or 2, characterized in that the shaft (20) is coupled to the pressing screw (16).

4. Device according to one of claims 1 to 3, characterized in that it can be screwed into the housing cover (12) of a valve housing (10).

5. Device according to one of claims 1 to 4, characterized in that the part of the shaft (20) which supports the operating cams (38, 40), and the limit switches (34, 35) are enclosed by a transparent covering cap (48).

6. Device according to claim 5, characterized in that the covering cap (48) is provided with a scale for the visible measurement of the valve lift.

7. Device according to one of claims 1 to 6, characterized in that the operating cams (38, 40) are manufactured from preferably red plastics.

8. Device according to one of claims 1 to 7, characterized in that the limit switches (34, 35) are constructed as miniature switches with a roller lever or inductive proximity switch.

9. Device according to one of claims 1 to 8, characterized in that the limit switches (34, 35) are arranged symmetrically to each other with respect to the axis (z) of the shaft (20), and in an unalterable position.

10. Device according to one of claims 5 or 6, characterized in that the covering cap (48) with a support part (28) can be rotated and stopped as a unit around a screw part (24) to the extent that is necessary for the appropriate position of a connector plug (50).

## Revendications

1. Dispositif pour contrôler la levée d'une soupape à entraînement pneumatique ou hydraulique, présentant un corps pouvant être actionné par une broche à pression (16), en particulier une soupape à diaphragme, une broche de commutation (20) étant en liaison active avec la broche à pression (16) et deux cames de contact (38,40) étant fixées sur la broche de commutation (20) pour l'actionnement de deux interrupteurs de fin de course (34, 35) servant de générateurs de signaux pour deux positions de soupape, les deux cames de contact (38, 40) étant disposées sur la broche de commutation (20) de façon à pouvoir être positionnées à une distance (a) l'une de l'autre et une came de contact (38,40) étant affectée à chaque interrupteur de fin de course (34,35), caractérisé en ce qu'entre les deux cames de contact (38, 40) est disposée une barrette transversale (36) agissant comme entraîneur, par laquelle les cames de contact (38, 40) peuvent être déplacées automatiquement dans leur bonne position de travail lors de l'ouverture et de la fermeture de la soupape.

2. Dispositif selon la revendication 1, caractérisé en ce que les cames de contact (38,40) sont fixées sur la broche de commutation (20) de façon à pouvoir coulisser en bloquant.

3. Dispositif selon la revendication 1 ou 2, caractérisé en ce que la broche de commutation (20) est couplée avec la broche à pression (16).

4. Dispositif selon l'une quelconque des revendications 1 à 3, caractérisé en ce qu'il peut être vissé dans le couvercle (12) d'un carter de soupape (10).

5. Dispositif selon l'une quelconque des revendications 1 à 4, caractérisé en ce que la partie de la broche de commutation (20) portant les cames de contact (38,40) et les interrupteurs de fin de course (34,35) sont entourés par un capot de recouvrement (48) transparent.

6. Dispositif selon la revendication 5, caractérisé en ce que le capot de recouvrement (48) est pourvu d'une échelle graduée pour la mesure visible de la levée de soupape.

7. Dispositif selon l'une quelconque des revendications 1 à 6, caractérisé en ce que les cames de contact (38,40) sont fabriquées à base de plastique de préférence rouge.

8. Dispositif selon l'une quelconque des revendications 1 à 7, caractérisé en ce que les interrupteurs de fin de course (34,35) se présentent sous la forme de microrupteurs avec levier à galets ou de détecteurs de proximité inductifs.

9. Dispositif selon l'une quelconque des revendications 1 à 8, caractérisé en ce que les interrupteurs de fin de course (34,35) sont disposés de façon symétrique entre eux par rapport à l'axe (z) de la broche de commutation (20) et dans une position qui ne peut pas être modifiée.

10. Dispositif selon l'une quelconque des revendications 5 ou 6, caractérisé en ce que le capot de recouvrement (48) avec une partie support (28) peut être tournée et bloquée sous la forme d'une unité autour d'une partie vissée (24), dans la mesure où c'est nécessaire pour la position adéquate d'une fiche de connexion (50).
